(19) **Europäisches Patentamt / European Patent Office / Office européen des brevets**

(11) **EP 2 775 258 B1**

(12) **EUROPEAN PATENT SPECIFICATION**

(45) Date of publication and mention
of the grant of the patent:
**03.02.2016 Bulletin 2016/05**

(51) Int Cl.:
***G01C 19/5684*** *(2012.01)*

(21) Application number: **13157878.3**

(22) Date of filing: **05.03.2013**

(54) **Microelectromechanical gyroscope**

Mikroelektromechanischer Kreisel

Gyroscope microélectromécanique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.09.2014 Bulletin 2014/37**

(73) Proprietor: **Teknologian tutkimuskeskus VTT Oy
02044 VTT Finland (FI)**

(72) Inventors:
• **Gorelick, Sergey
02044 VTT (FI)**
• **Jaakkola, Antti
02044 VTT (FI)**

(74) Representative: **Seppo Laine Oy
Itämerenkatu 3 B
00180 Helsinki (FI)**

(56) References cited:
**US-A1- 2004 211 257    US-A1- 2009 064 780**

EP 2 775 258 B1

**Description**

**Field of the Invention**

The invention relates to micromechanical gyroscopes. In particular, the invention relates to a gyroscope with a vibrating mass element and a method of detecting rotational motion using such gyroscope.

**Background of the Invention**

Gyroscopes are used for detecting orientation of objects. Traditional rotating wheel gyroscopes are very reliable but cannot be used in small devices due to their size and weight. Optical gyroscopes are accurate but also large and expensive. For these reasons, microelectromechnical (MEMS) gyroscopes are widely used in consumer electronics products.

Most of the currently available MEMS gyroscopes are vibrational gyroscopes based on exciting a primary vibrational mode to a mass element are capacitively detecting rotation-induced vibrations in a direction orthogonal to the oscillation of the primary mode due to Coriolis force. Such gyroscopes are also called Vibrational Structure Gyroscopes (VSGs).

Capacitive detection widely used in MEMS gyroscopes, however, requires large a vibrational amplitude in order to reach a high signal-to-noise ratio (SNR). For this purpose, MEMS gyroscopes need to operate in a high vacuum, thus increasing the Q-value of the oscillator. Even then the capacitive read-out remains a challenge. Although allowing high amplitude of oscillation, high Q-value has the disadvantage of ruling out the possibility of integrate or combine both an accelerometer and a gyroscope on the same chip, because accelerometers need low Q-values for proper operation.

Thus, there exists a need for improved MEMS gyroscopes.

US 2004/021125 7 A1 discloses a micro-machined sensor that provided 1-axis of acceleration sensing and 2-axes of angular rate sensing. In the disclosed system, circular masses rotate vibrationally in antiphase to sense acceleration and angular rate. US 2009 / 0064780 A1 discloses a microelectromechanical sensor with a driving mass which is moved in an oscillatory rotary motion about an axis to measure acceleration.

**Summary of the Invention**

It is an aim of the invention to address at least some of the above mentioned problems and to achieve a novel microelectromechanical gyroscope.

It is also an aim of the invention to provide a novel method for detecting rotation using the gyroscope principle.

The invention is based on the idea of exciting a suspended microelectromechanical mass element into an orbiting vibrational mode and sensing the external rotation by detecting external rotation-induced changes in the orbiting vibrational mode. Such changes comprise mainly phase shift and/or change in resonance frequency of vibration or orbiting radius of the mass element. The external rotation namely changes the mechanical impedance of the gyroscope, which is seen as changes in one or more of these parameters as the orbiting mass system finds a new equilibrium state under the external rotation. For example, the excitation to the orbiting mode may be carried out by exerting oscillating forces at two orthogonal directions with 90 degrees phase difference to the mass element and the sensing may be carried out by sensing means adapted to detect a phase shift in said orbiting mode due to external rotation.

More specifically, the invention is characterized by what is stated in the independent claims.

The invention has the advantage that it helps to improve the signal-to-noise ratio (SNR) of MEMS gyroscopes and thus improving their overall sensitivity. This is because it has been observed that the phase signal resulting from the circulating motion is very strong. In addition, the invention relieves the requirements relating to the Q-value of the resonator and, in fact, benefits from low Q-values, as will be explained later in more detail. To mention one such benefit here, a low-Q gyroscope operating according to the present principle provides a linear phase response. By means of the invention, the overall mass of MEMS gyroscopes can be reduced, making them more immune to external shocks. The invention also allows for manufacturing of novel combined gyroscope and accelerometer components with reduced size and overall costs.

An advantage of using orbiting motion is that an access to the rotation-induced phase shift is obtained. Phase shift signals are considerably larger than amplitude-based signals, thereby allowing for higher SNR. Traditional MEMS gyroscopes rely on a weak signal due to the amplitude change of vibration caused by the action of Coriolis force. In an orbiting gyroscope, in orthogonal directions in the orbiting plane, the vibrational modes are in 90 degrees phase difference with respect to each other and both act as drive and sense modes simultaneously. The sensing does not harmfully affect driving. When the gyroscope, i.e. vibration in both in-plane modes, is in resonance, the external rotation exerts equal force on both modes. Since there is a 90 degrees phase difference, maxima and minima of Coriolis force due to the external rotation acts on each mode at different times by a quarter of a cycle, until the system finds a new equilibrium under the rotation. A phase shift is induced as a result of finding the equilibrium. The quality factor of the oscillators in the system determined the time required to find the equilibrium.

The term "orbiting" is herein used to cover not only circular motion but any bi-directional motion in which the center of mass of the mass element moves along a closed loop path of any shape. In particular, elliptical and circular movements are covered.

According to one example there is provided a MEMS gyroscope comprising a substrate and a mass element flexibly connected to the substrate using suspension means. There are also provided means for exciting the mass element into a bi-directionally orbiting vibrational mode, and sensing means for detecting external rotational motion of the micromechanical gyroscope based on the phase shift in the vibrational motion of the vibrating mass element caused by the external rotational motion.

According to one embodiment, there are provided two or more gyroscopic elements of the above-described kind such that the momentums of their mass elements cancel each other out in at least one dimension and preferably in both lateral dimensions.

According to one embodiment, the suspension means comprise suspension elements extending in at least two directions. Preferably, the suspension elements extend on lateral sides of the mass element into two orthogonal directions. They may be on at least two orthogonal sides of the mass element. In a typical configuration, there is however four suspension elements arranged symmetrically on four different sides of the mass element. The suspension elements are oriented along planar main axes of the mass element, i.e. anchor points of the suspension elements on the mass element and respectively on the substrate are located on those axes. There are also other configuration possibilities.

According to one embodiment, the means for exciting are located on two adjacent sides of the mass element and the sensing means on two remaining sides of the mass element. Thus, the excitation and sensing means are located on different lateral sides of the mass element.

If there are many gyroscopic elements, their mass elements are preferably at least partially independently suspended and provided with at least partly individual exciting means and sensing means so as to allow their independent orbiting motions and their sensing.

According to one embodiment, the means for exciting comprise

- first means for applying a first harmonic driving force in one lateral direction of the mass element and

- second means for applying a second harmonic driving force in another lateral direction of the mass element and in a different phase compared with the first harmonic driving force.

Thus resulting effect of the first and second harmonic driving forces is bi-directionally orbiting motion of the mass element. The lateral directions are preferably orthogonal with respect to each other and said phases differ by 90 degrees. Provided that the mass element is symmetrical with respect to the directions of the first and second forces, this results in circular orbiting motion.

According to one example, the operation principle of the means for exciting is piezoelectric. Detailed examples of achieving piezoelectric excitation are presented later in this document.

According to one example, the vibration of the mass element in said orbiting mode is adapted to take place in the plane of the mass element and the substrate around the center of mass of the mass element. Thus, in this example, the vibrational mode is preferably a pure in-plane (x-y plane) orbiting mode without significant out-of-plane movement. This is suitable for detecting external rotation about the z-axis.

According to another example, the vibration of the mass element is adapted to take place out of the plane of the mass element and the substrate, preferably in a plane parallel to their plane. Such out-of plane y-z or x-z orbiting can be used to detect the external rotation around the x- and y-axis, respectively. The motion of one mass element may also be adapted to be not planar but have components in all three dimensions. Or they may be provided a plurality of mass elements orbiting in different planes on one chip. By combing x-y, y-z and z-x independent or combined orbiting motions on the same chip, a 3-axis gyroscope can be obtained.

According to one example the operation principle of the sensing means is piezoelectric. This is advantageous since it eliminates the need of capacitive read-out, which suffers from low SNR and sets stringent requirements for the amplitude of vibration.

As an alternative to piezoelectric sensing means, there may be provided inductive sensing means.

In a preferred embodiment, the external rotation of the gyroscope is detected based on phase shifts and change of radius of the orbiting motion of the mass element due to the external rotation. Both the phase shift and the change of radius of orbiting are caused by interaction of the mass-spring system with the additional inertial forces induced by the external rotation of the system. The system responds to the external rotation by reaching a new equilibrium state with different orbiting radius and phase with respect to the phase of the driving excitation.

According to one embodiment, the Q-value of the gyroscope in the bi-directional vibrational mode is 200 or less, preferably 100 or less, in particular 50 or less. The advantage of Q-values of 50 and less is that they provide almost linear response of the gyroscope to the rate of external rotation. Such Q-values are also beneficial as concerns the integration of the gyroscope with an accelerometer.

Indeed, in one example, the device is a combined gyroscope-accelerometer and thus comprises an accelerometer integrated on the same substrate. This allows for very compact, sensitive and low-cost both linear and rotational acceleration or movement detectors to be manufactured.

In one example, the mass element, suspension means, means for exciting and sensing means are part of a mass element of a microelectromechanical accelerometer. According to one embodiment, there is provided a cascade of gyroscopes such that the mass element of a first gyroscope (first mass element) comprises a second microelectromechanical gyroscope built "inside" the first gyroscope. The second gyroscope preferably operates according to the same principle as the first gyroscope, i.e. is a bi-directionally orbiting phase shift-sensitive gyroscope, but is naturally considerably smaller than the first gyroscope. Detailed constructional examples of such design are presented later in this document.

According to one example, there is provided a method for detecting rotational motion, comprising

- providing a microelectromechanical gyroscope comprising a mass element suspended to a substrate,
- exciting a bi-directional orbiting vibrational resonance mode to the mass element,
- sensing the phase shift of the vibrating mass element caused by the external rotational motion during said vibrational motion, and
- determining at least one characteristic feature of the rotational motion based on the phase shift.

In a preferred embodiment, the at least one characteristic feature comprises the speed of rotation. In another preferred embodiment, the at least one characteristic feature comprises the direction of rotation, which is also deductible from the phase shift.

Next, embodiments and advantages of the invention are discussed in more detail with reference to the attached drawings.

**Brief Description of the Drawings**

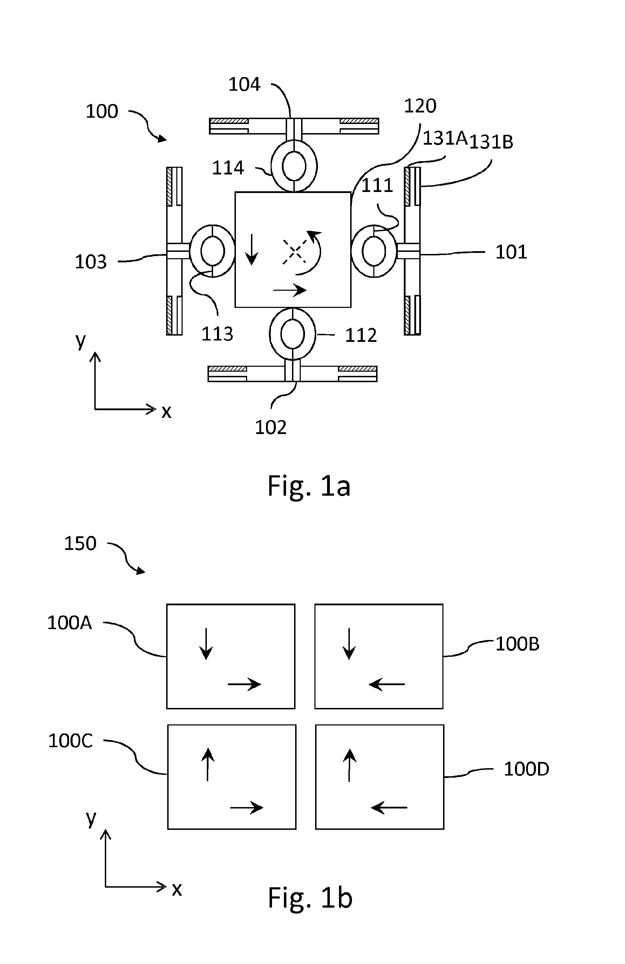

Fig. 1a shows a top view of a gyroscope according to one embodiment of the invention.
Fig. 1b shows a schematic matrix of four gyroscopic elements of the type illustrated in
Fig. 1a or 9 and whose momentums cancel out each other.
Fig. 2a shows a top view of a gyroscope according to another embodiment of the invention.
Fig. 2b shows a matrix of two gyroscopic elements of the type illustrated in Fig. 2 and whose momentums cancel out each other.
Figs. 3a and 3b illustrate vibrational relative amplitude vs. rate of external rotation graphs of orbiting gyroscopes with two different quality factors, respectively.
Fig. 4a illustrates the calculation of phase angles of an orbiting gyroscope.
Fig. 4b and 4c show phase angles vs. external rotation rate graphs of orbiting gyroscopes with different quality factors.
Fig. 5 shows an equivalent circuit that can be used for modeling the mechanical resonator part of a gyroscope.
Fig. 6 shows an embodiment of the invention where an orbiting gyroscope is part of an accelerometer.
Fig. 7 shows a cascade of two orbiting gyroscopic elements.
Fig. 8 shows a cross-sectional view of a piezoactive excitation or sensing arrangement.
Fig. 9 shows a top view of a gyroscope according to another embodiment of the invention.
Figs. 10a, 10b, 11a and 11b show two different piezotransducer configurations as cross-sectional views and related current and phase curves.

**Detailed Description of Embodiments**

Fig. 1a shows a top view of a micromechanical gyroscopic element 100 according to one embodiment of the invention. The element 100 comprises a mass element 120 and four elongated excitation or sensing elements 101-104 arranged on four lateral sides of the mass element 120. Each of the excitation or sensing elements 101-104 comprises excitation or sensing means 131A, 131B (denoted only on element 101). Preferably two adjacent ones of the excitation or sensing elements 101-104 are excitation elements (say, elements 101 and 102) and two remaining ones sensing elements (elements 103 and 104). Excitation means on excitation elements 101, 102 are adapted to make the excitation elements bend upon electric actuation so as to cause a force perpendicular to the excitation elements 101, 102 on the mass element 120. Sensing means on the sensing elements 102, 104 are respectively adapted to detect the bending the sensing means.

To allow simultaneous movement of the mass element 120 to both in-plane directions, the mass element is flexibly suspended to the excitation and sensing elements 101-104 using suspension elements 111-114, in this case ring-shaped connectors. Alternatively to ring-shaped connectors, any other suspension elements allowing the movement of the mass element 120 with respect to its surrounding structures in both directions may be used. One example is a meander spring.

The shape of the mass element 120 may be a square, as shown in Fig. 1a, or it may take any other shape. Preferably, the shape has a symmetry with respect to at least one in-plane principal axis, preferably both in-plane principal axes. The element may be for example rectangular, elliptical, circular or cross- or X-shaped.

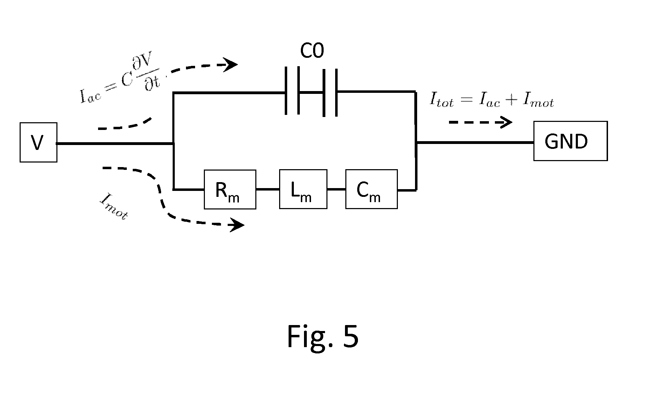

When both excitation element 101 and 102 are driven with a suitable sinusoidially alternating voltage, the mass element 102 begins to vibrate with a circularly orbiting path (curved arrow in Fig. 1a) around its center point (dashed cross in Fig. 1a). Straight arrows in Fig. 1a illustrate the force exerted on the mass element 120 in x and y directions at a single point of time due to the excitation. During the orbiting motion, the sensing elements 103, 104 are bent, which can be detected as a sinusoidial voltage on the sensing means. Another means is to drive both 101 and 103, and 102 and 104 with a phase difference of 90 degrees, and to sense the motional current and its phase. The piezoresonator can be described as an RLCco (inductance-capacitance-resistance RLC circuit parallel with a static capacitor C0) circuit, where the RLC branch is an equivalent of the mechanical resonator in the electrical domain. Such equivalent circuit is shown in Fig. 5. At mechanical resonance with frequency $f_0=1/(2\pi) \sqrt{(k/m)}$, where k is the spring constant and m is mass, one can measure the electrical resonance $f_0=1/(2\pi) \sqrt{(1/(LC))}$, and detect its phase with respect to the driving voltage.

The gyroscope may comprise only one gyroscopic element, as shown in Fig. 1a, or a plurality of gyroscopic element adapted to co-operate so as to form a functional gyroscope. Fig. 1b schematically shows gyroscope 150 formed by a matrix of four gyroscopic elements 100A-100D of the type illustrated in Fig. 1a and whose momentums cancel out each other. At each point of time, the forces (illustrated as arrows) exerted on the mass elements of the gyroscopic elements 100A-100D cancel each other so that the total momentum of the gyroscope is zero. As appreciated by a skilled person, the described situation can be achieved by simply driving the excitation means of the gyroscopic elements 100A-100D with a suitable pattern of 90/180/270 degree phase differences between the elements.

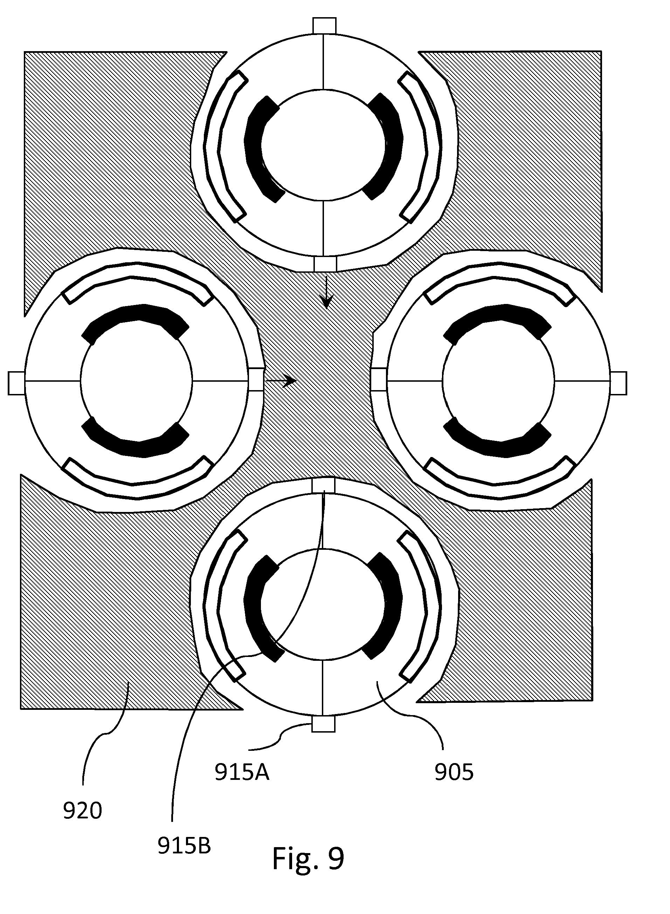

Fig. 9 shows a variant of the structure of Fig. 1a. It comprises a mass element 920 and four circular (ring-type) excitation or sensing elements 905 attached respectively on four points to the mass element 920 using anchors 915B. On opposite sides of the circular elements 905, there are anchors 915A for attachment to the substrate (not shown). Each of the circular elements 905 comprises a circular spring allowing for two-dimensional motion through deformation and piezostripes attached to it for causing or sensing said deformation. The piezostripes are processed on top of circular springs. If the piezostripes on at least two adjacent elements 905 are fed with opposite alternating voltages with suitable phasing (90 degrees shift between the elements), the mass element is driven in to orbiting motion.

In the configuration of Fig. 9, the mass element 920 is shaped so that it has been possible to arrange the excitation or sensing elements 905 within the mass element 920. This allows for maximizing the mass of the mass element 920 without increasing the size of the resonator.

Like elements shown in Fig. 1a, four elements shown in Fig. 9 can also be arranged as shown in Fig. 1b such that the total momentum of the structure is zero. Similarly, the momentum of any element construction may be cancelled by suitably grouping the elements and adjusting their rotational characteristics.

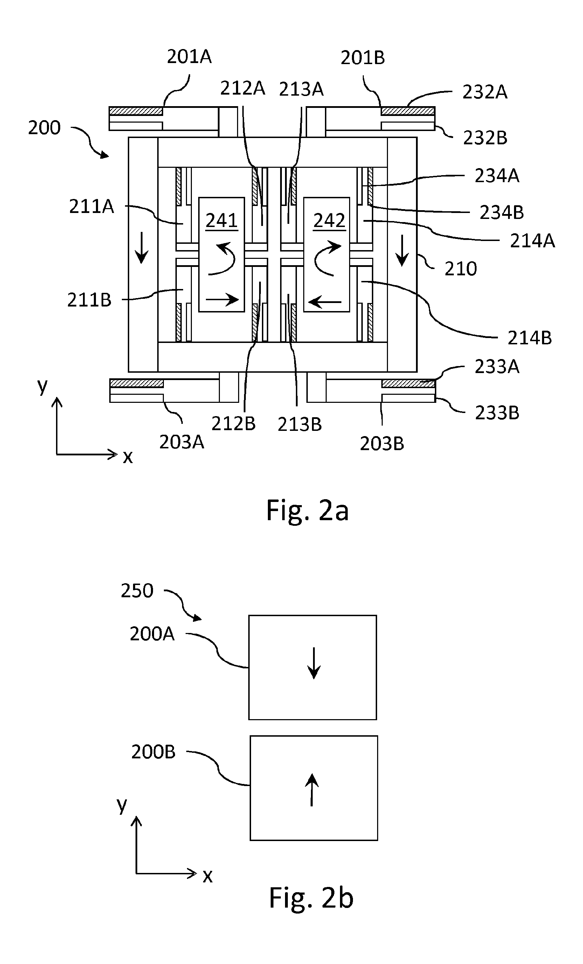

Fig. 2a shows a design of a gyroscope 200 according to an alternative embodiment of the invention. The gyroscope comprises two mass elements 241, 242 arranged to orbit in different directions. The mass elements 241, 242 are suspended to a common frame 210 with first combined suspension and excitation elements 211A, B; 213A, B and second combined suspension and sensing elements 212A, B; 214A, B. Each of the combined suspension and excitation/sensing elements comprises excitation or sensing means 234A, B, depending on its role in the system. The two mass elements 241, 242 are made to vibrate with a 180 degree phase difference. Within the frame 210, vibration in only one direction, namely x-direction is achieved and needed. The masses 241 and 242 can be connected by a coupling spring (not shown) to ensure that both have the same resonance frequency. All of the suspension spring 211A, 212A, 211B, 212B, 213A, 214A, 213B, 214B can be used either for driving or sensing or both simultaneously.

The frame 210 is suspended to the substrate of the gyroscope by second combined suspension and excitation/sensing elements 201A, 201B and second combined suspension and sensing/excitation elements 203A, 203B, which are adapted to excite and sense the movement of the whole frame 210, including the mass elements 241, 242 suspended to the frame 210 as described above, in a direction perpendicular to the movement of the mass elements 241, 242 within the frame. Thus, the motion of the both mass elements 241, 242 in y-direction is achieved using the same excitation means 201A, 201B/203A, 203B. Again, the combined suspension and excitation/sensing elements are equipped with suitable driving/sensing means 232A, B; 233A, B (numbered in Fig. 2a only in elements 201B, 203B).

It should be noted that the above description reveals only some potential configurations for achieving the necessary driving and sensing and the configuration may differ from that described above. Driving and sensing can be carried out simultaneously using common elements for both these functions by detecting the current though the system and monitoring its phase, or use some elements for driving and others for sensing, as described above for simplicity. More generally speaking, there needs to be at least some means for driving and at least some means for sensing, which can but need not be the same as those for driving.

It should also be noted that the excitation/sensing elements are drawn in Fig. 2a as single beams, but these elements can have a more complex geometry allowing the necessary suspension and excitation/sensing. Examples include meandering and ring geometries.

Again, driving of the excitation elements 201A, B; 211A, B; 213A, B with suitable sinusoidal voltage form and suitable phase difference schema, both the mass elements individually rotate along a circularly orbiting paths around their center points.

In the embodiment of Fig. 2a, two gyroscopic elements are integrated so that they partly utilize common excitation and sensing means. The design ensures that the mass elements 241, 242 oscillate in the y-direction always at the same phase and that the forces in the x-direction cancel each other at all times. In order to zero the total momentum, that is, to cancel the forces also in y-direction, two such designs 200A, 200B may be incorporated in a single gyroscope 250, as shown in Fig. 2b.

When an orbiting gyroscope according to the invention is rotated as a whole, the mass elements experience a phase shift detectable using the sensing means in relation to the excitation. The angular velocity of rotation can be calculated from the detected phase shift or resonance frequency shift. At the same time, the amplitude of orbiting of each of the mass elements increase or decrease, depending on the direction of rotation.

Piezoactuation and piezosensing are preferred actuation and sensing methods due to their simplicity and sensitivity. A piezoactuator transforms voltage directly into force and vice versa, making it ideal for the present application.

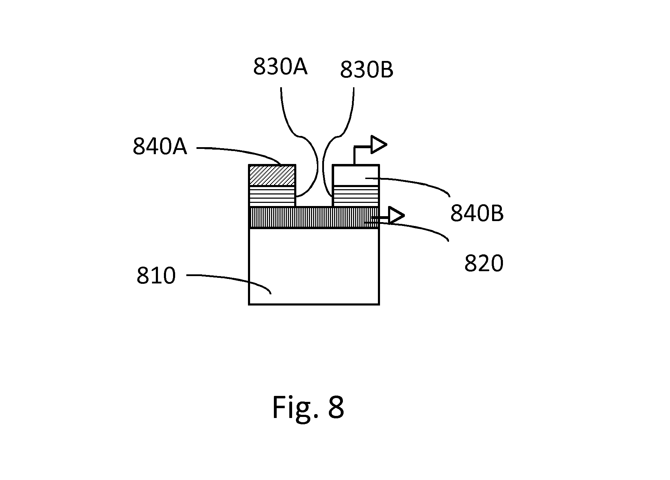

Fig. 8 shows a cross-sectional view of a piezoactuator. The substrate 810 serves is the lowermost layer and a common or split bottom electrode layer is provided on top of the substrate. Split bottom electrodes slightly increase the complexity of the system, but makes driving and sensing more flexible because the piezostripes 830A and 830B can be accessed/driven/sensed independently. On top of the bottom electrode/electrodes, there are provided two piezoactive material zones 830A, 830B. On top of the piezoactive layers, there are a two electrodes 830A, 830B, corresponding to the electrodes shown in Figs 1a and 2a on the ends of each elongated excitation or sensing elements. The in-plane piezoactuation is achieved by applying different polarities of voltage to the piezoactive layers. For example, +V applied to the 840A, -V applied to the 830B and metal 820 is grounded (zero potential). By applying voltage V to e.g. 840A and ground to 840B while leaving the bottom metal 820 floating would result in a circuit of two capacitors corresponding to two piezolayers with voltage division of V/2 across each piezolayer. This single-ended drive results in automatic arrangement of voltage polarities across both piezolayers such as to result in the in-plane actuation.

The desired orbiting motion is achieved for example by providing a driving voltage having the shape $+V sin\omega_0 t$ at the electrodes filled with /-oriented lines in Figs. 1a and 2a and $+V cos\omega_0 t$ at the electrodes filled with \-oriented lines in Figs 1a and 2a.

The designs presented above differ in that the x- and y-modes in the gyroscope of Fig. 1a are coupled and in the gyroscope of Fig. 2a non-coupled. The coupling in the first case is due to the suspension elements 111-114, whose deformation in one direction also deforms the springs of the other direction to some degree. In the second case, the x- and y-modes are totally independent.

Both designs presented above have advantages. The design of Fig. 1a and Fig. 9 has the advantage that it is easier to match the resonance frequency of both modes. On the other hand, as indicated above, the displacement in one mode deforms the springs of the other mode thereby coupling the modes. The design of Fig. 2a has the advantage of simpler mechanical design. On the other hand, matching of resonances of the x- and y-modes may be more difficult. In addition, the modes may have e.g. different quality factors and vibrational amplitudes, which causes the orbiting motion to be elliptical instead of circular.

Sensing in all the described embodiments can be carried out for example by impedance/admittance measurements of the resonating circuit. One can either drive and sense simultaneously by detecting the current though the system and monitoring its phase, or use some elements for driving and others for sensing. Both methods have their advantages. It is preferred that the systems allows for driving some piezoactuators and for measuring the voltage from some others.

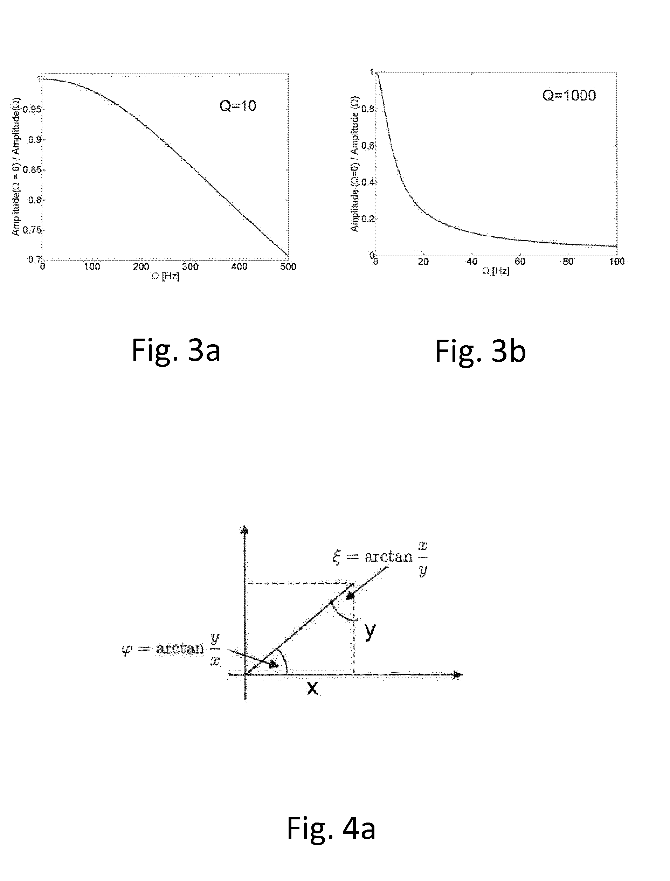

With reference to Figs. 3a and 3b, the amplitude change of orbiting depends on the rate of external rotation ($\Omega$), depending on the quality factor (Q) of the gyroscope. The dependence is very non-linear. In low-Q gyroscopes, the change is, however, more linear. Fig 3a shows a calculatory relative amplitude vs. speed of external rotation when Q=10, and Fig. 3b when Q=1000.

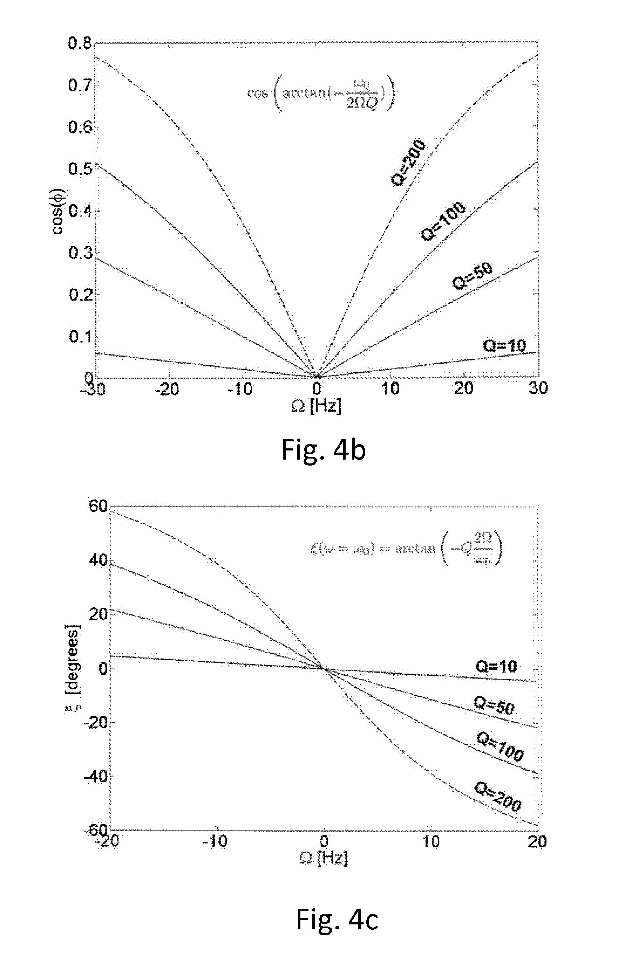

Figs. 4a-4c illustrate the phase behavior of an orbiting gyroscope when subjected to rotation. First, Fig. 4a illustrates the notation used in the calculation of phase angles. For more detailed explanation of the notation, please refer to the chapter "Theoretical considerations". Fig. 4b and 4c show phase angles shown in Fig. 4a vs. external angular velocity with different quality factors. It can be seen that the linearity is very high when Q≤100 and almost perfect when Q≤50. Although the slopes of the curves decrease with a decreasing quality factor, the slopes are still considerably high on the linear quality factor range for sensitive detection. Also, the direction of rotation can be determined from the phase angles.

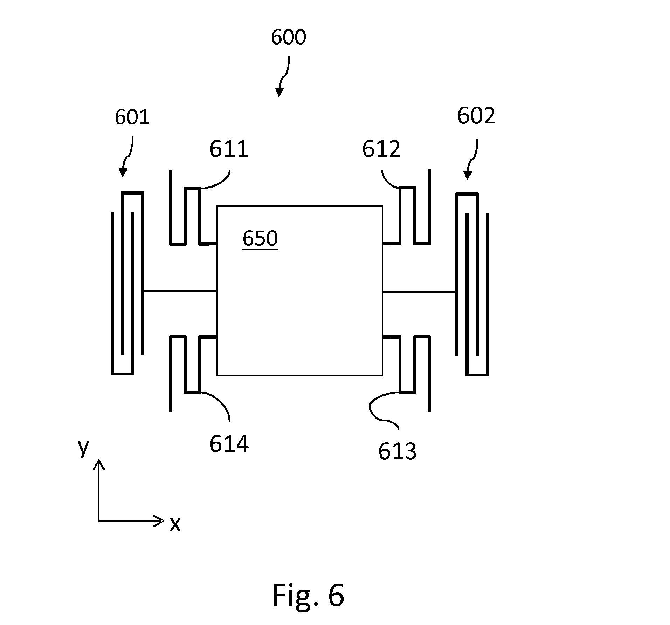

Fig. 6 shows an example where an orbiting gyroscope 650 is part of an accelerometer so as to form a combined MEMS gyroscope and accelerometer 600. The gyroscope part 650 may be of any kind, for example according to one of the embodiments illustrated in Figs. 1a, 1b, 2a, 2b or 9. It is however preferred that the gyroscope has zero external momentum at least in the x-direction, preferably both directions, i.e., is according to one of embodiments shown in Figs. 1b, 2a or 2b. The gyroscope 650 is suspended to a substrate using suspension means 611-614. In addition, there are acceleration-sensing elements 601, 602 or two lateral sides of the gyroscope 650 and being sensitive to the acceleration in x-direction. The acceleration-sensing elements 601, 602 may be capacitive comb-type elements, or of any other suitable type. In a comb-type sensor, the acceleration causes the suspended gyroscope as a mass element of the accelerometer move with respect to the substrate and therefore one comb-electrode to come nearer another comb-electrode such that their mutual capacitance changes. When the acceleration is over, the suspension elements 611-614 return the gyroscope to its initial middle position.

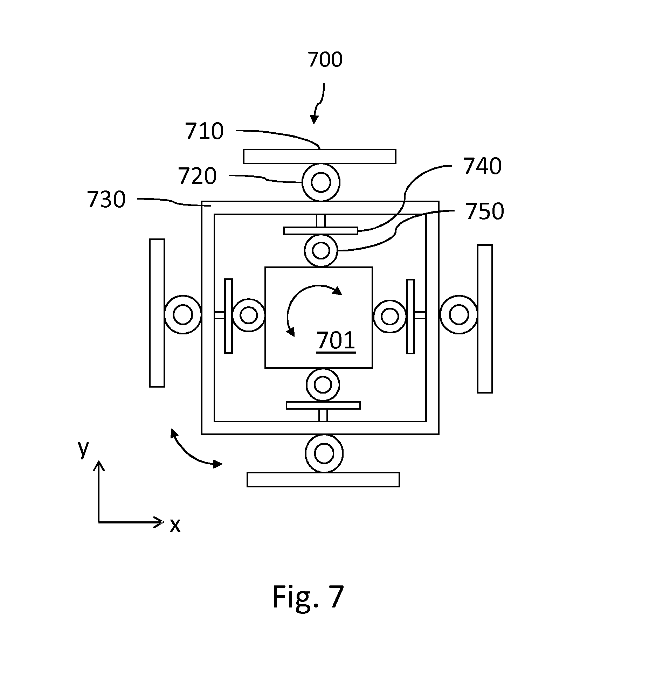

Fig. 7 shows a cascade 700 of two orbiting gyroscopic elements. There is an inner gyroscopic element formed by a first mass element 701, suspension elements 750 and excitation and sensing elements 740. The inner gyroscopic element is attached to a frame 730 and this totality acts as a mass element for an outer gyroscopic element, which additionally comprises suspension elements 720 and excitation and sensing elements 710. The inner and outer mass elements may be arranged to rotate in the same or opposite directions. In Fig. 7, the gyroscopic elements are of the same type as in Fig. 1a but a cascade could likewise be formed using the general idea behind the design of Fig. 2a. The cascade may have also more than two gyroscopic elements.

<u>Theoretical considerations</u>

An analytical model well describing an orbiting gyroscope has been formed but it is not derived here from the beginning. Instead, resulting formulae, applicable to a resonator according to Fig. 1a, for example, that show how the amplitude r and phase φ of coupled mechanical vibrations change as response to external rotation at angular velocity Ω are given below:

$$r(\omega = \omega_0, \Omega) = \frac{F_0/m}{\sqrt{(2\Omega\omega_0)^2 + (\frac{\omega_0^2}{Q})^2}} =$$

$$= \left(Q\frac{F_0}{k}\right)\frac{1}{\sqrt{1 + (2Q\frac{\Omega}{\omega_0})^2}}$$

$$\varphi(\omega = \omega_0, \Omega) = \arctan\left(-\frac{\omega_0}{2\Omega Q}\right)$$

where $F_0$ and $m$ are the driving force and the mass of the mass element, $\omega = \omega_0$ is the initial angular velocity (resonator in resonance with the driving force), and $Q$ the quality factor of the resonator and $k$ a spring constant..

The amplitude A of orbiting is:

$$A = \frac{F_0}{m}\left(\underbrace{\frac{\omega_0^2 - \omega^2 + 2\Omega\omega}{(\omega_0^2 - \omega^2 + 2\Omega\omega)^2 + (\frac{\omega\omega_0}{Q})^2}}_{x} - i\underbrace{\frac{\frac{\omega\omega_0}{Q}}{(\omega_0^2 - \omega^2 + 2\Omega\omega)^2 + (\frac{\omega\omega_0}{Q})^2}}_{y}\right)$$

where x and $y$ are vibration factors in the orthogonal in-plane directions as illustrated in Fig. 4a (rotation around z-axis).

A numerical finite element model analysis in frequency domain has also been carried out to demonstrate the feasibility of the invention. The results of the finite element model correspond well with the analytical model.

In the electric domain, the phase of the motional current with respect to the driving voltage can be monitored. Total current through a piezoactuator can be formulated as

$$I = \frac{\partial Q}{\partial t} = \frac{\partial (CV)}{\partial t} = C\frac{\partial V}{\partial t} + V\frac{\partial C}{\partial t} = \underbrace{C\frac{\partial V}{\partial t}}_{\text{ac current}} + \underbrace{V\frac{\partial C}{\partial x}\frac{\partial x}{\partial t}}_{\text{motional current}}$$

where $Q$ is the charge of the piezotransducer $C$ capacitance, and $V$ voltage. The transduction factor $\eta$ relates vibration amplitude/velocity and generated force with the applied voltage and motional current as follows:

$$F = \eta V_{ac} \text{ - definition}$$
$$I_{mot} = \eta\dot{x}$$
$$\Rightarrow$$
$$\dot{x} = \frac{I_{mot}}{\eta}$$
$$I_{mot} = V_{dc}\frac{\partial C}{\partial t} = \underbrace{V_{dc}\frac{\partial C}{\partial x}}_{\eta}\frac{\partial x}{\partial t} = \eta\dot{x}$$

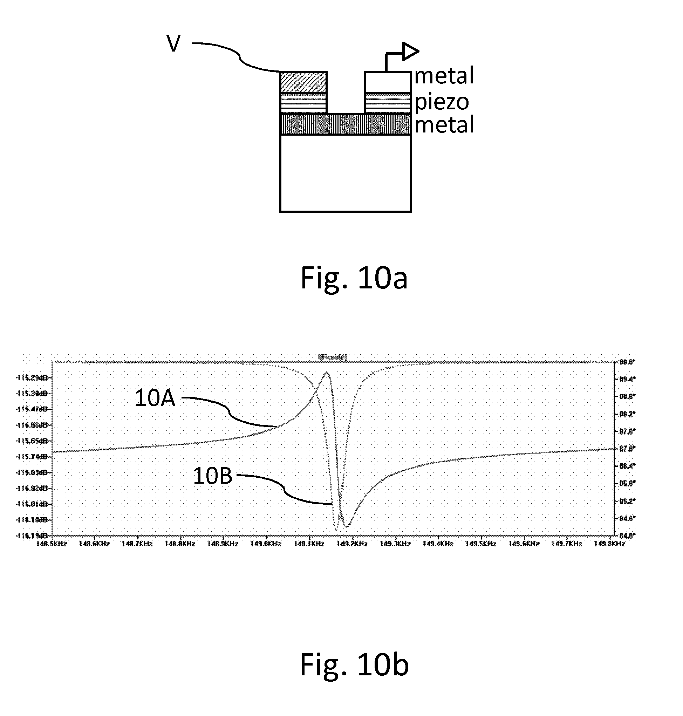

The result of monitoring depends on the configuration of the piezotransducers. Fig. 10a shows a piezoresonator configuration with a metal-piezomaterial-metal structure with non-grounded lower metal layer. A current through the resonator/oscillator curve 10A and a phase between current and voltage curve 10B as a function of frequency in the case of Fig. 10a are shown in Fig. 10b.

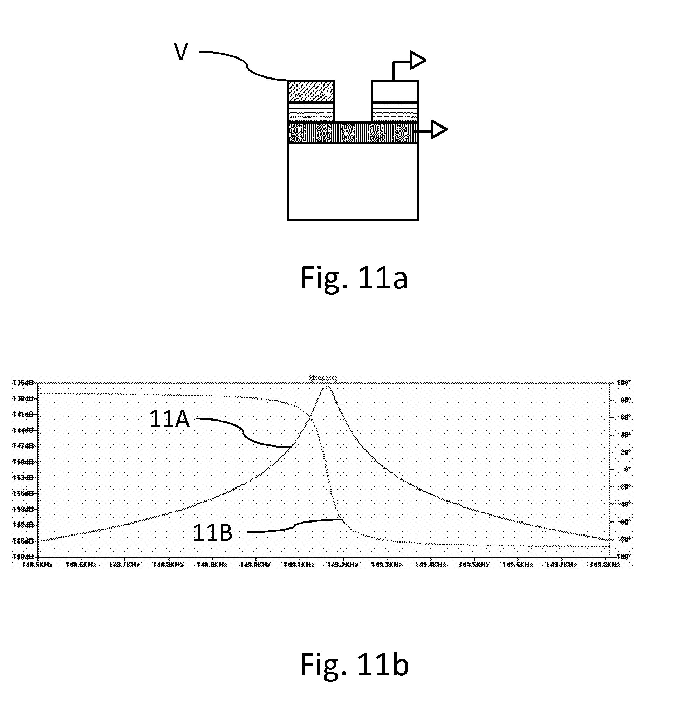

Fig. 11a shows a piezotransducer otherwise similar to that of Fig. 10a but with a grounded bottom electrode. In Fig. 11b, current through the resonator (in particular through the cable and into the "upper" ground shown) is shown as curve 11A and a phase between current and voltage as curve 11B as a function of frequency in the case of Fig. 11a. As can be seen, the motional current at resonance is 0 degrees. Zero phase at resonance is detectable because only motional current is observed.

Embodiments of the invention as has been described above are stated in the appended claims.

## Claims

**1.** A micromechanical gyroscope comprising

   - a substrate, and
   - at least one gyroscopic element (100) comprising

      ∘ a mass element (120),
      ∘ suspension means (111-114) for flexibly connecting the mass element (120) with respect to the substrate,
      ∘ means for exciting (101-104) the mass element (120) into an orbiting bi-directional vibrational mode in which a center of mass of the mass element (120) moves along a closed loop path, and
      ∘ sensing means (131A-131B) for detecting vibrational characteristics of the mass element (120), the sensing means being adapted to detect at least one change in the characteristics of the orbiting vibrational mode caused by external rotational motion of the micromechanical gyroscope,

   **characterized in that**
   - the means for exciting (101-104) comprise means for exerting oscillating forces at two orthogonal directions with 90 degrees phase difference to the mass element for achieving the orbiting mode, and
   - the sensing means (131A-131B) are adapted to detect a phase shift in said orbiting mode caused by said external rotation.

**2.** The gyroscope according to claim 1, **characterized in that** said at least one change in the characteristics of the orbiting mode comprises a change in the phase shift, change in resonance frequency and/or change in radius of said orbiting mode.

3. The gyroscope according to any of claims 1 - 2, **characterized in that** the suspension means (111-114) comprise suspension elements extending in at least two directions, preferably two orthogonal directions.

4. The gyroscope according to claim 3, **characterized by** comprising four suspension elements arranged symmetrically on four different sides of the mass element (120) along planar main axes of the mass element.

5. The gyroscope according to claim 4, **characterized in that** the means for exciting (101-104) are effectively located on two adjacent sides of the mass element (120) and the sensing means (131A-131B) on two remaining sides of the mass element (120).

6. The gyroscope according to any of the preceding claims, **characterized in that** said means for exciting (101-104) a vibrational mode to the mass element (120) comprise first means for applying a first harmonic driving force in one first lateral direction of the mass element (120) and second means for applying a second harmonic driving force in a direction orthogonal to the first lateral direction and with 90 degrees phase difference compared with the first harmonic driving force, resulting in orbiting motion of the mass element (120).

7. The gyroscope according to any of the preceding claims, **characterized in that** said sensing means (131A-131B) are adapted to detect the external rotation of the gyroscope based on phase shifts induced by the change of radius of the orbiting motion of the mass element (120) due to the external rotation.

8. The gyroscope according to any of the preceding claims, **characterized by** comprising at least two, preferably at least four, such gyroscopic elements in which the mass elements (120) are at least partly individually suspended with respect to the substrate and the means for exciting (101-104) the mass elements (120) into bi-directional orbiting vibrational modes are adapted to cause the total momentum of the mass elements (120) to be substantially zero at all times in at least one direction.

9. The gyroscope according to any of the preceding claims, **characterized in that** a quality factor of the vibrational mode is 200 or less, preferably 100 or less, in particular 50 or less.

10. The gyroscope according to any of the preceding claims, **characterized by** comprising at least two such gyroscopic elements arranged as a cascade such that one of the gyroscopic elements is adapted to operate as a mass element (120) of the other of the gyroscopic elements.

11. A method for detecting rotational motion, comprising

- providing a microelectromechanical gyroscope comprising a mass element suspended to a substrate,
- exciting the mass element into an orbiting bi directional vibrational mode in which a center of mass of the mass element moves along a closed loop path, and
- sensing vibrational behavior of the mass element during said rotational motion, the sensing comprising sensing at least one change in the vibrational characteristics of the orbiting vibrational mode caused by external rotational motion of the microelectromechanical gyroscope, and determining at least one characteristic feature of the rotational motion based on said change in the vibrational characteristics,
- **characterized by**
- exerting oscillating forces at two orthogonal directions with 90 degrees phase difference to the mass element for achieving the orbiting mode, and
- detecting a phase shift in said orbiting mode caused by said external rotation.

12. The method according to claim 11, **characterized in that** the at least one change in the vibrational characteristics of the orbiting mode comprise the phase shift, change in resonance frequency and/or change in the radius of orbiting of the vibrating mass element.

13. The method according to claim 11 or 12, **characterized in that** the at least one characteristic feature comprises the speed of rotation and/or the direction of rotation.

14. The method according to any of claims 11-13, **characterized in that** the microelectromechanical gyroscope is the gyroscope according to any one of claims 1-10.

**Patentansprüche**

1. Mikromechanisches Gyroskop, umfassend

    - ein Substrat, und
    - wenigstens ein gyroskopisches Element (100), das

        ◦ ein Masseelement (120),
        ◦ Aufhängemittel (111 bis 114), um das Masseelement (120) in Bezug auf das Substrat elastisch anzuschließen,
        ◦ Mittel, um das Masseelement (120) zu einem umlaufenden bidirektionalen Schwingungsmodus anzuregen, in dem sich ein Zentrum der Masse des Masseelements (120) entlang einer geschlossenen Bahn bewegt, und
        ◦ Erfassungsmittel (134A bis 131B), um Schwingungseigenschaften des Masseelements (120) zu detektieren, wobei die Erfassungsmittel dazu geeignet sind, wenigstens eine Veränderung der Eigenschaften des umlaufenden Schwingungsmodus, die durch eine externe Drehbewegung des mikromechanischen Gyroskops verursacht wird, zu detektieren,
        umfasst,

    dadurch gekennzeichnet, dass
    - die Mittel zum Anregen (101 bis 104) Mittel zur Ausübung von oszillierenden Kräften in zwei orthogonalen Richtungen mit einem Phasenunterschied von 90 Grad auf das Masseelement, um den umlaufenden Modus zu erreichen, umfassen, und
    - die Erfassungsmittel (131A bis 131B) dazu geeignet sind, eine Phasenverschiebung in dem umlaufenden Modus, die durch die externe Drehung verursacht wird, zu detektieren.

2. Gyroskop nach Anspruch 1, **dadurch gekennzeichnet, dass** die wenigstens eine Veränderung der Eigenschaften des umlaufenden Schwingungsmodus eine Veränderung der Phasenverschiebung, eine Veränderung der Resonanzfrequenz und/oder eine Veränderung des Radius des umlaufenden Modus umfasst.

3. Gyroskop nach einem der Ansprüche 1 bis 2, **dadurch gekennzeichnet, dass** die Aufhängemittel (111 bis 114) Aufhängeelemente umfassen, die sich in wenigstens zwei Richtungen, vorzugsweise zwei orthogonale Richtungen, erstrecken.

4. Gyroskop nach Anspruch 3, **dadurch gekennzeichnet, dass** es vier Aufhängeelemente umfasst, die symmetrisch an vier unterschiedlichen Seiten des Masseelements (120) entlang planarer Hauptachsen des Masseelements angeordnet sind.

5. Gyroskop nach Anspruch 4, **dadurch gekennzeichnet, dass** sich die Mittel zum Anregen (101 bis 104) wirksam an zwei benachbarten Seiten des Masseelements (120) befinden, und sich die Erfassungsmittel (131A bis 131B) an den beiden verbleibenden Seiten des Masseelements (120) befinden.

6. Gyroskop nach nach einem der vorhergehenden Ansprüche, **dadurch gekennzeichnet, dass** die Mittel zum Anregen (101 bis 104) eines Schwingungsmodus für das Masseelement (120) Folgendes umfassen: erste Mittel zum Ausüben einer ersten harmonischen Antriebskraft in einer ersten seitlichen Richtung des Masseelements (120) und zweite Mittel zum Ausüben einer zweiten harmonischen Antriebskraft in einer orthogonal zu der ersten seitlichen Richtung verlaufenden Richtung, die verglichen mit der ersten harmonischen Antriebskraft einen Phasenunterschied von 90 Grad aufweist, was zu einer umlaufenden Bewegung des Masseelements (120) führt.

7. Gyroskop nach einem der vorhergehenden Ansprüche, **dadurch gekennzeichnet, dass** die Erfassungsmittel (131A bis 131B) dazu geeignet sind, die externe Drehung des Gyroskops auf Basis von Phasenverschiebungen zu detektieren, die durch die Veränderung des Radius der umlaufenden Bewegung des Masseelements (120) aufgrund der externen Drehung hervorgerufen werden.

8. Gyroskop nach einem der vorhergehenden Ansprüche, **dadurch gekennzeichnet, dass** es wenigstens zwei und vorzugsweise vier derartige gyroskopische Elemente umfasst, bei denen die Masseelemente (120) wenigstens teilweise unabhängig in Bezug auf das Substrat aufgehängt sind, und die Elemente zum Anregen (101 bis 104) der Masseelemente (120) zu den bidirektionalen umlaufenden Schwingungsmoden dazu geeignet sind, zu verursachen, dass das gesamte Moment der Masseelemente (120) zu jeder Zeit in wenigstens einer Richtung im Wesentlichen null beträgt.

9. Gyroskop nach einem der vorhergehenden Ansprüche, **dadurch gekennzeichnet, dass** ein Qualitätsfaktor des Schwingungsmodus 200 oder weniger, vorzugsweise 100 oder weniger, und insbesondere 50 oder weniger beträgt.

10. Gyroskop nach einem der vorhergehenden Ansprüche, **dadurch gekennzeichnet, dass** es wenigstens zwei derartige gyroskopische Elements umfasst, die so als Kaskade angeordnet sind, dass eines der gyroskopischen Elemente dazu geeignet ist, als Masseelement (120) des anderen der gyroskopischen Elements zu arbeiten.

11. Verfahren zum Detektieren einer Drehbewegung, umfassend

- Bereitstellen eines mikroelektromechanischen Gyroskops, das ein Masseelement aufweist, welches an einem Substrat aufgehängt ist,
- Anregen des Masseelements zu einem umlaufenden bidirektionalen Schwingungsmodus, in dem sich ein Zentrum der Masse des Masseelements entlang einer geschlossenen Bahn bewegt, und
- Erfassen des Schwingungsverhaltens des Masseelements während der Drehbewegung, wobei das Erfassen das Erfassen wenigstens einer Veränderung der Schwingungseigenschaften des umlaufenden Schwingungsmodus, die durch eine externe Drehbewegung des mikroelektromechanischen Gyroskops verursacht wird, umfasst, und Bestimmen wenigstens eines charakteristischen Merkmals der Drehbewegung auf Basis der Veränderung der Schwingungseigenschaften,
- **gekennzeichnet durch**
- Ausüben von oszillierenden Kräften in zwei orthogonalen Richtungen mit einem Phasenunterschied von 90 Grad auf das Masseelement, um den umlaufenden Modus zu erreichen, und
- Detektieren einer Phasenverschiebung in dem umlaufenden Modus, die **durch** die externe Drehung verursacht wird.

12. Verfahren nach Anspruch 11, **dadurch gekennzeichnet, dass** die wenigstens eine Veränderung der Schwingungseigenschaften des umlaufenden Modus die Phasenverschiebung, die Veränderung der Resonanzfrequenz und/oder die Veränderung des Radius des Umlaufs des schwingenden Masseelements umfasst.

13. Verfahren nach Anspruch 11 oder 12, **dadurch gekennzeichnet, dass** das wenigstens eine charakteristische Merkmal die Geschwindigkeit der Umdrehung und/oder die Richtung der Umdrehung umfasst.

14. Verfahren nach einem der Ansprüche 11 bis 13, **dadurch gekennzeichnet, dass** das mikroelektromechanische Gyroskop das Gyroskop nach einem der Ansprüche 1 bis 10 ist.

**Revendications**

1. Gyroscope micromécanique comprenant

- un substrat et
- au moins un élément gyroscopique (100) comprenant

• un élément formant masse (120),
• un moyen de suspension (111-114) pour relier avec souplesse l'élément formant masse (120) par rapport au substrat,
• un moyen pour exciter (101-104) l'élément formant masse (120) dans un mode vibratoire bidirectionnel orbital dans lequel un centre de masse de l'élément formant masse (120) se déplace le long d'un chemin en boucle fermée, et
• un moyen de détection (131A-131B) pour détecter des caractéristiques vibratoires de l'élément formant masse (120), le moyen de détection étant conçu pour détecter au moins un changement des caractéristiques du mode vibratoire orbital provoqué par un mouvement rotatif externe du gyroscope micromécanique,

**caractérisé en ce que**
- le moyen pour exciter (101-104) comprend un moyen pour exercer des forces d'oscillation au niveau de deux directions orthogonales avec une différence de phase de 90 degrés par rapport à l'élément formant masse pour parvenir au mode orbital, et

- le moyen de détection (131A-131B) est conçu pour détecter un déphasage dans ledit mode orbital provoqué par ladite rotation externe.

2. Gyroscope selon la revendication 1, **caractérisé en ce que** ledit au moins un changement des caractéristiques du mode orbital comprend un changement du déphasage, un changement de la fréquence de résonance et/ou un changement de rayon dudit mode orbital.

3. Gyroscope selon n'importe laquelle des revendications 1 - 2, **caractérisé en ce que** le moyen de suspension (111-114) comprend des éléments de suspension s'étendant dans au moins deux directions, de préférence deux directions orthogonales.

4. Gyroscope selon la revendication 3, **caractérisé en ce qu'**il comprend quatre éléments de suspension agencés de manière symétrique sur quatre côtés différents de l'élément formant masse (120) le long d'axes planaires principaux de l'élément formant masse.

5. Gyroscope selon la revendication 4, **caractérisé en ce que** le moyen d'excitation (101-104) est situé de façon efficace sur deux côtés adjacents de l'élément formant masse (120) et le moyen de détection (131A-131B) sur deux côtés restants de l'élément formant masse (120).

6. Gyroscope selon n'importe laquelle des revendications précédentes, **caractérisé en ce que** ledit moyen d'excitation (101-104) d'un mode vibratoire vers l'élément formant masse (120) comprend un premier moyen pour appliquer une force d'entraînement de première harmonique dans une première direction latérale de l'élément formant masse (120) et un second moyen pour appliquer une force d'entraînement de seconde harmonique dans une direction orthogonale à la première direction latérale et avec une différence de phase de 90 degrés en comparaison à la force d'entraînement de première harmonique, aboutissant à un mouvement orbital de l'élément formant masse (120).

7. Gyroscope selon n'importe laquelle des revendications précédentes, **caractérisé en ce que** ledit moyen de détection (131A-131B) est conçu pour détecter la rotation externe du gyroscope en se basant sur des déphasages induits par le changement de rayon du mouvement orbital de l'élément formant masse (120) en raison de la rotation externe.

8. Gyroscope selon n'importe laquelle des revendications précédentes, **caractérisé en ce qu'**il comprend au moins deux, de préférence au moins quatre, de tels éléments gyroscopiques dans lesquels les éléments formant masses (120) sont au moins en partie individuellement suspendus par rapport au substrat et le moyen d'excitation (101-104) des éléments formant masses (120) dans des modes vibratoires orbitaux bidirectionnels est conçu pour amener la quantité totale de mouvement des éléments formant masses (120) à être sensiblement nulle à tout moment dans au moins une direction.

9. Gyroscope selon n'importe laquelle des revendications précédentes, **caractérisé en ce qu'**un facteur de qualité du mode vibratoire est de 200 ou moins, de préférence 100 ou moins, en particulier 50 ou moins.

10. Gyroscope selon n'importe laquelle des revendications précédentes, **caractérisé en ce qu'**il comprend au moins deux tels éléments gyroscopiques agencés comme une cascade de sorte qu'un des éléments gyroscopiques est conçu pour fonctionner comme un élément formant masse (120) de l'autre des éléments gyroscopiques.

11. Procédé pour détecter un mouvement rotatif, comprenant

- la fourniture d'un gyroscope microélectromécanique comprenant un élément formant masse suspendu à un substrat,
- l'excitation de l'élément formant masse dans un mode vibratoire bidirectionnel orbital dans lequel un centre de masse de l'élément formant masse se déplace le long d'un chemin en boucle fermée, et
- la détection d'un comportement vibratoire de l'élément formant masse pendant ledit mouvement rotatif, la détection comprenant la détection d'au moins un changement des caractéristiques vibratoires du mode vibratoire orbital provoqué par un mouvement rotatif externe du gyroscope microélectromécanique, et la détermination d'au moins une particularité caractéristique du mouvement rotatif en se basant sur ledit changement des caractéristiques vibratoires,
- **caractérisé par**

- l'exercice de forces d'oscillation au niveau de deux directions orthogonales avec une différence de phase de 90 degrés par rapport à l'élément formant masse pour parvenir au mode orbital, et
- la détection d'un déphasage dans ledit mode orbital provoqué par ladite rotation externe.

12. Procédé selon la revendication 11, **caractérisé en ce que** l'au moins un changement des caractéristiques vibratoires du mode orbital comprend le déphasage, un changement de la fréquence de résonance et/ou un changement du rayon orbital de l'élément vibrant formant masse.

13. Procédé selon la revendication 11 ou 12, **caractérisé en ce que** l'au moins une particularité caractéristique comprend la vitesse de rotation et/ou le sens de rotation.

14. Procédé selon n'importe laquelle des revendications 11 à 13, **caractérisé en ce que** le gyroscope microélectromécanique est le gyroscope selon n'importe laquelle des revendications 1 à 10.

Fig. 1a

Fig. 1b

Fig. 2a

Fig. 2b

Fig. 3a

Fig. 3b

Fig. 4a

$$\cos\left(\arctan\left(-\frac{\omega_0}{2\Omega Q}\right)\right)$$

Q=200

Q=100

Q=50

Q=10

## Fig. 4b

$$\xi(\omega = \omega_0) = \arctan\left(-Q\frac{2\Omega}{\omega_0}\right)$$

Q=10

Q=50

Q=100

Q=200

## Fig. 4c

$I_{ac} = C\dfrac{\partial V}{\partial t}$

C0

$I_{tot} = I_{ac} + I_{mot}$

V

GND

$R_m$ $L_m$ $C_m$

$I_{mot}$

Fig. 5

Fig. 6

Fig. 7

Fig. 8

915A          905

920

915B          Fig. 9

Fig. 10a

Fig. 10b

Fig. 11a

Fig. 11b

**EP 2 775 258 B1**